(19)

Europäisches
Patentamt
European
Patent Office
Office européen
des brevets

(11)    **EP 1 904 774 B1**

(12)    **EUROPEAN PATENT SPECIFICATION**

(45) Date of publication and mention
of the grant of the patent:
**24.08.2011   Bulletin 2011/34**

(51) Int Cl.:
**F16K 15/14** *(2006.01)*

(21) Application number: **06765977.1**

(22) Date of filing: **30.06.2006**

(86) International application number:
**PCT/IB2006/052213**

(87) International publication number:
**WO 2007/004179 (11.01.2007 Gazette 2007/02)**

(54) **PASSIVE CONTROL VALVE FOR USE WITH A PRESSURIZED VESSEL FOR A LIQUID DROPLET SYSTEM**

PASSIVES STEUERVENTIL ZUR VERWENDUNG MIT EINEM UNTER DRUCK STEHENDEN GEFÄSS FÜR EIN FLÜSSIGKEITSTRÖPFCHENSYSTEM

SOUPAPE DE REGULATION PASSIVE POUR RESERVOIR SOUS PRESSION UTILISEE DANS UN SYSTEME PRODUISANT DES GOUTTELETTES DE LIQUIDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.06.2005   US 695658 P**

(43) Date of publication of application:
**02.04.2008   Bulletin 2008/14**

(73) Proprietor: **Koninklijke Philips Electronics N.V.
5621 BA Eindhoven (NL)**

(72) Inventors:
• **DUINEVELD, Paulus, Cornelis
NL-5621 BA Eindhoven (NL)**

• **KOOLOIJKER, Klaas
NL-5621 BA Eindhoven (NL)**
• **NIJBOER, Marie Sybien
NL-5621 BA Eindhoven (NL)**

(74) Representative: **Damen, Daniel Martijn
Philips
Intellectual Property & Standards
P.O. Box 220
5600 AE Eindhoven (NL)**

(56) References cited:
**EP-A1- 1 281 897         WO-A-95/15895
WO-A-2004/089805     DE-A1- 3 828 811
DE-U1- 20 304 170      DE-U1- 20 304 172
US-A1- 2 839 225         US-A1- 3 901 272
US-A1- 5 542 845**

## Description

This invention relates generally to valves to control the release of gas from a pressurized vessel such as for use in a liquid droplet generation and delivery system, and more specifically concerns such a control valve which is passive in operation.

Pressurized vessels containing gas, such as air, are known for use in various applications. One example is for accelerating liquid droplets, such as a dentifrice or water droplets, used in a teeth cleaning system. In such an application, and similar applications involving the acceleration of liquid droplets, it is important that the mass flow of the gas from the pressurized vessel remain sufficiently constant over a selected period of time, typically during the entire time that the valve is open, from the vessel being full to the vessel being empty.

Heretofore, control valves to provide constant mass flow have been active rather than passive in operation. In an active valve, the exit area of the valve increases by means of a control circuit/assembly as a function of time, compensating for the reduced pressure of the gas as the vessel empties. It is possible to calculate mathematically the function which will accomplish this result. However, the control circuit/structure to carry out the function is complex; such a valve is expensive and will often be unreliable in use.

Hence, it would be desirable to have a simple, preferably passive, control valve to produce a constant mass flow rate from a pressurized vessel as it goes from full capacity to empty.

US 2,839,225 discloses a dispensing valve for single-use low-pressure containers, particularly the type of valve which utilizes a rubber-like elastic seal in which a rigid valve member is mounted, wherein the valve member comprises a valve head which closes against an annular valve seating face on the seal. The valve known from US 2,839,225 further comprises an orifice having a tapering tip, whose only opening is a small-diameter flow-restricting inlet. Using such an orifice renders the flow characteristics of the valve independent of the valving mechanism.

DE 203 04 172 U1 discloses an insert component acting as a control valve, and having a housing inside which is movably installed a shut-off component which in the closed position seals off one or more through flow openings of feed channels. The housing is in at least two sections with the feed channels running into a chamber, and a seal is provided between the facing sides of the two adjacent housing sections. The seal is connected in one piece to at least one annular membrane movable inside the chamber by feed medium, which constitutes the shut-off component. When pressure of the feed medium increases, a movement of membrane portions is realized, as a result of which gaps between the membrane and the housing are narrowed, and openings are eventually sealed off.

US 3,901,272 discloses an unidirectional controlled flow valve having a flexible duckbill-like portion with a slit through which a wire projects to define small controlled flow areas between the wire and slit when the duckbill-like portion is closed by higher pressure forces external of the portion than internal, and free flow in the opposite direction through the open slit when the pressure conditions are reversed. The valve has a peripheral lip at its base made of an elastomeric material.

The present invention is a liquid droplet system, comprising: a pressurized gas vessel; a duct portion leading from the pressurized vessel; and a control valve for controlling the release of gas from the pressurized vessel, the released gas then being used to accelerate liquid droplets, wherein the control valve comprises a rubberized material having an opening there through, allowing gas to escape in a controlled manner from the pressurized vessel, wherein an inversion parameter ($\alpha$) determining a change of the cross sectional area ($A_c$) of the opening (26) through the control valve (14) inversely proportional to the change in pressure ($P_o$) of the gas in the pressurized vessel (10) according to the formula $A_c \propto P_o^{-\alpha}$ is between 0.9 and 1.1.

Figure 1 is a simple cross-sectional view showing the combination of a pressurized vessel, a control valve and a droplet generation system.
Figure 2 is a cross-sectional view showing in more detail the embodiment of the control valve described herein.

In general, the present invention is a passive control valve 14 which in operation releases gas from a pressurized vessel with a mass flow rate which remains constant over a selected period of use, such as from the time that the release of gas begins until the gas is all released. The valve has an opening 26 which permits the release of gas. The valve itself is so constructed and arranged and comprises such a material that the area of the opening through the valve 14 is an inverse function of the reservoir pressure, i.e. as the pressure decreases, the cross-sectional area of the opening 26 increases.

Such a valve is useful in a variety of applications. One such application is a liquid droplet generation system, with the gas exiting from the control valve being used to accelerate liquid droplets to a desired high velocity. One example of the use of liquid droplets is for cleansing teeth, in which individual droplets of water or liquid dentifrice of a selected size are accelerated to a desired velocity and directed toward a user's teeth for cleansing thereof. Such a droplet system is shown and described in co-pending application Serial No. 60/537,690, filed on January 20, 2004, which is owned by the assignee of the present invention, the contents of which are hereby incorporated by reference. It should be understood, however, that the present control valve can be used in other gas-assisted liquid droplet systems. This could include applications such as delivering medications transdermally by directing high speed droplets through the stratum corneum into the epidermis.

Still further, it should be understood that the control valve can be used in other applications where it is important to have a constant mass flow rate from a source of pressurized gas, such as air, or other gas, while the vessel is emptying.

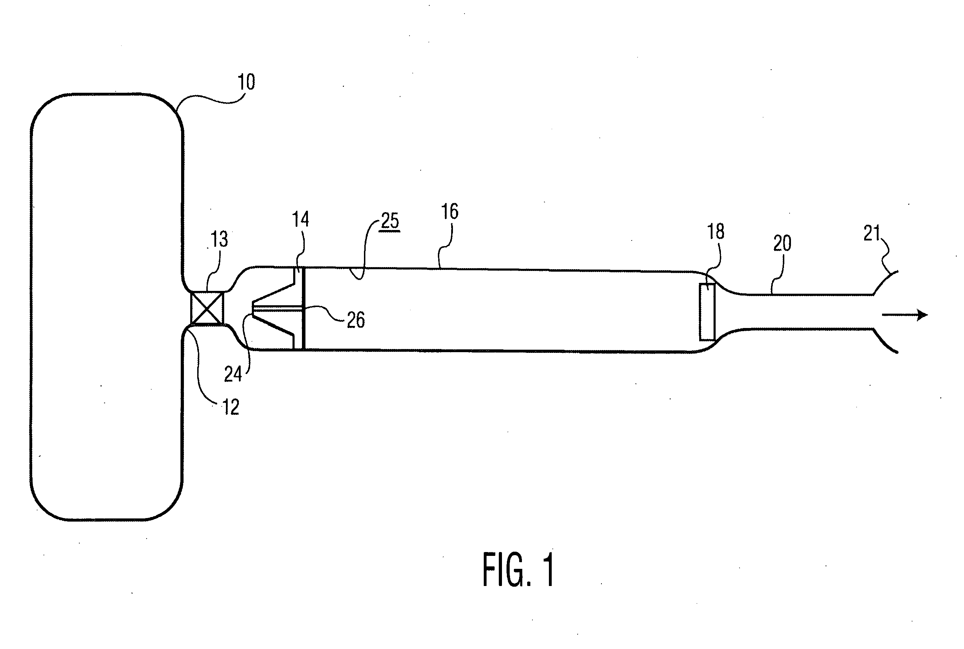

A gas-assisted liquid droplet dentifrice system 10 is shown in Figure 1. It includes a pressurized gas vessel 10, which has been pressurized from an external source to a desired pressure, for example 50 Bar. Other pressures could, of course, be used. One such vessel is made from stainless steel, with a length of 0.14 m, an internal volume of 55 cc, an outer diameter of 3 cm and a wall thickness of 3 mm. The exit opening 12 from the pressurized vessel is controlled by a shut-off valve 13. Downstream of shut-off valve 13 is a passive control valve 14, located at the front end of a brass duct 16 which has a diameter in the embodiment shown of 5 mm, and a length of 25 cm. At the exit of duct portion 16 is represented a droplet generator 18, such as shown and described in the above-referenced application. At this point, duct portion 16 narrows to duct portion 20 which has a diameter of approximately 0.5 mm. The droplets exit from duct portion 20 at a top member 21, accelerated by the air stream from valve 14 and are directed toward a target, such as the teeth of a user.

During release of gas from the pressurized vessel, the difference in pressure between that inside the vessel and the atmospheric pressure is large enough to produce gas exiting at the speed of sound in the smallest portion of the exit field. The mass flow of air through the above system is determined by the following formula:

$$\dot{m} = \frac{\rho_o K A_c}{\sqrt{R T_o}}$$

Where K is a constant, $\rho_0$ is the pressure in the vessel, $T_o$ is the temperature in the pressurized vessel,

$$R = R_g / M_m = 287 \ \text{J} \cdot \text{kg}^{-1} \cdot \text{K}^{-1} \ (\text{for air})$$

with $R_g$ being the universal gas constant, $M_m$ the molar mass of air, and $A_c$ is the area of the smallest part of the valve, where the air velocity is equal to the speed of sound.

During the release of gas, the pressure in the vessel 12 will decrease from its initial value (50 Bar in the above example) to approximately atmospheric pressure. In view of the above formula, under isothermal conditions, a valve with a value of constant open area $A_c$ will result in a decreasing gas flow as the pressure in the vessel decreases. This results in a decrease in gas velocity in the system. Such a condition is also true for adiabatic conditions.

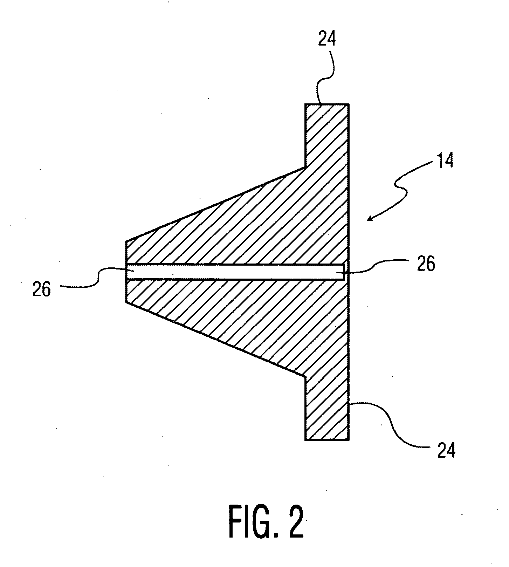

Valve 14 in Figure 1 is shown in more detail in Figure 2, and is a passive control valve which results in a constant mass flow over the time of release of gas from the vessel and corresponding decrease in pressure in vessel 10. In general, valve 14 is conical in exterior configuration, with a small peripheral lip 24 at the base of the valve which contacts and seals against the interior surface 25 of duct portion 16 (Figure 1) leading from the pressurized tank. In the embodiment shown, for a vessel which is pressurized to 50 Bar, for example, a representative valve 14 is 11 mm long, with opening 26 through the valve having a diameter of 0.2 mm. The wall thickness of valve 14 increases from 6.7 mm at the end 28 proximal the pressurized vessel to approximately 10.6 mm at lip 24.

In the embodiment shown, valve 14 is made from rubber, although it could be made from other flexible, resilient materials, such as, for instance, other elastomeric materials. For a pressurized vessel of 50 Bar, the hardness of the rubber is 50 Shore A. The configuration and structure of a rubberized valve results in a substantially constant mass flow volume from a pressurized vessel of 50 Bar.

In operation, air will flow through opening 26 in valve 14 at a substantially constant rate; at the end of opening 26, the pressure will drop to a value close to atmospheric. Due to this pressure difference, rubber valve 14 will be initially deformed inwardly to some extent, resulting in a smaller local internal diameter. In the embodiment shown, the opening will be approximately 0.07 mm in diameter at the start. As the pressure in the vessel decreases, due to continuous exit of the gas, a reduction in the pressure difference occurs relative to atmospheric pressure. This reduces the pressure on the control valve, letting it gradually open up to its normal internal diameter. The rate of increase in the size of the opening in the valve shown for the pressurized vessel described is a sufficiently precise inverse function of the pressure remaining in the vessel, so that the mass flow of gas from the vessel remains constant during exit of the gas from the vessel.

The area $A_c$ changes with the pressure in the vessel according to the formula: $A_c \propto P_o^{-\alpha}$. For $A_c$ to be a sufficiently precise inverse function of the pressure in the vessel, the value of inversion parameter $\alpha$ is between 0.9 and 1.1, preferably between 0.95 and 1.05, and most preferably between 0.98 and 1.02.

For a different pressurized vessel, with a different pressure, valve 14 could have a different length, shape and wall thickness, a different nominal opening diameter, and could comprise a different material, having a different hardness value. These factors are all adjusted to produce a constant mass flow over time for a particular pressurized vessel application. Again, for the particular vessel described above, the key consideration is the adjustment of the various physical characteristics of the control valve to correspond with the pressure so as to provide an inverse function of opening size v. pressure remaining in the vessel.

Another advantage of the rubberized passive control valve is that it dampens sound generated by the shock which results from the pressure decline from the value of pressure in the vessel to a pressure close to atmospheric conditions.

Accordingly, a passive pressure control valve has been shown and described which produces a constant mass flow for a pressurized vessel.

## Claims

1. A liquid droplet system, comprising:

   a pressurized gas vessel (10);
   a duct portion (16) leading from the pressurized vessel (10); and
   a control valve (14) for controlling the release of gas from the pressurized vessel (10), the released gas then being used to accelerate liquid droplets, **characterized in that** the control valve (14) comprises a rubberized material having an opening (26) there through, allowing gas to escape in a controlled manner from the pressurized vessel (10), wherein an inversion parameter ($\alpha$) determining a change of the cross sectional area ($A_c$) of the opening (26) through the control valve (14) inversely proportional to the change in pressure ($P_o$) of the gas in the pressurized vessel (10) according to the formula $A_c \propto P_o^{-\alpha}$ is between 0.9 and 1.1.

2. The system of claim 1, wherein the control valve (14) comprises a peripheral lip (24) which contacts and seals against the interior surface (25) of the duct portion (16), wherein the control valve (14) is generally in the form of a truncated cone, with the opening (26) extending through approximately the center thereof, and the peripheral lip (24) at the base.

3. The system of claim 1, wherein the gas is air.

4. The system of claim 1, wherein the rubberized material of the control valve (14) is rubber.

5. The system of claim 1, wherein the inversion parameter ($\alpha$) is between 0.98 and 1.02.

6. The system of claim 1, comprising a pressurized vessel (10) of 50 Bar, wherein the rubberized material of the control valve (14) has a Shore hardness of 50.

7. The system of claim 1, being a liquid droplet system for cleaning teeth.

8. A control valve (14) for use with a pressurized gas vessel (10), **characterized by** a rubberized material having an opening (26) there through, wherein the control valve (14) is generally in the form of a truncated cone, with the opening (26) extending through approximately the center thereof, and a peripheral lip (24) at the base, wherein an inversion parameter ($\alpha$) determining a change of the cross sectional area ($A_c$) of the opening (26) through the control valve (14) inversely proportional to the change in pressure ($P_o$) of the gas in the pressurized vessel (10) according to the formula $A_c \propto P_o^{-\alpha}$ is between 0.9 and 1.1.

9. The control valve (14) of claim 8, wherein the rubberized material is rubber.

## Patentansprüche

1. Flüssigkeitstropfensystem mit:

   einem unter Druck stehenden Gasbehälter (10);
   einem von dem unter Druck stehenden Behälter (10) ausgehenden Leitungsabschnitt (16), sowie
   einem Steuerventil (14) zur Steuerung der Abgabe von Gas aus dem unter Druck stehenden Behälter (10), wobei das abgegebene Gas sodann zur Beschleunigung von Flüssigkeitstropfen verwendet wird, **dadurch gekennzeichnet, dass** das Steuerventil (14) ein Gummi-Material mit einer Öffnung (26) durch dieses umfasst, durch die Gas aus dem unter Druck stehenden Behälter (10) kontrolliert entweichen kann, wobei ein Inversionsparameter ($\alpha$), der eine Änderung der Querschnittsfläche ($A_c$) der Öffnung (26) durch das Steuerventil (14) invers proportional zu der Änderung des Druckes ($P_o$) des Gases in dem unter Druck stehenden Behälter (10) gemäß der Formel $A_c \propto P_o^{-a}$ ermittelt, zwischen 0,9 und 1,1 liegt.

2. System nach Anspruch 1, wobei das Steuerventil (14) eine periphere Lippe (24) umfasst, welche die Innenfläche (25) des Leitungsabschnitts (16) kontaktiert und an dieser dichtend anliegt, wobei das Steuerventil (14) im Allgemeinen die Form eines Kegelstumpfes aufweist, wobei sich die Öffnung (26) durch in etwa den Mittelpunkt desselben erstreckt und sich die periphere Lippe (24) am Fuß befindet.

3. System nach Anspruch 1, wobei es sich bei dem Gas um Luft handelt.

4. System nach Anspruch 1, wobei es sich bei dem Gummi-Material des Steuerventils (14) um Gummi handelt.

5. System nach Anspruch 1, wobei der Inversionsparameter ($\alpha$) zwischen 0,98 und 1,02 liegt.

**6.** System nach Anspruch 1, das einen unter Druck stehenden Behälter (10) von 50 Bar umfasst, wobei das Gummi-Material des Steuerventils (14) eine Shore-Härte von 50 aufweist.

**7.** System nach Anspruch 1, wobei es sich hierbei um ein Flüssigkeitstropfensystem zum Reinigen der Zähne handelt.

**8.** Steuerventil (14) zur Verwendung mit einem unter Druck stehenden Gasbehälter (10), **gekennzeichnet durch** ein Gummi-Material mit einer Öffnung (26) **durch** das Steuerventil, wobei das Steuerventil (14) im Allgemeinen die Form eines Kegelstumpfes aufweist, wobei sich die Öffnung (26) **durch** in etwa den Mittelpunkt desselben erstreckt und sich die periphere Lippe (24) am Fuß befindet, wobei ein Inversionsparameter ($\alpha$), der eine Änderung der Querschnittsfläche ($A_c$) der Öffnung (26) durch das Steuerventil (14) invers proportional zu der Änderung des Druckes ($P_o$) des Gases in dem unter Druck stehenden Behälter (10) gemäß der Formel $A_c \propto P_o^{-a}$ ermittelt, zwischen 0,9 und 1,1 liegt.

**9.** Steuerventil (14) nach Anspruch 8, wobei es sich bei dem Gummi-Material um Gummi handelt.

**Revendications**

**1.** Système produisant des gouttelettes de liquide, comprenant :

un réservoir de gaz sous pression (10) ;
une partie de conduit (16) provenant du réservoir sous pression (10) ; et
une soupape de régulation (14) pour réguler la libération d'un gaz du réservoir sous pression (10), le gaz libéré étant ensuite utilisé pour accélérer les gouttelettes de liquide, **caractérisé en ce que** la soupape de régulation (14) comprend un matériau caoutchouté pourvu d'une ouverture (26) traversante permettant au gaz de s'échapper d'une manière régulée du réservoir sous pression (10), dans lequel un paramètre d'inversion ($\alpha$) déterminant un changement de la surface de coupe transversale ($A_c$) de l'ouverture (26) à travers la soupape de régulation (14) inversement proportionnel au changement de pression ($P_o$) du gaz dans le réservoir sous pression (10) selon la formule $A_c \propto P_o^{-\alpha}$ est entre 0,9 et 1,1.

**2.** Système selon la revendication 1, dans lequel la soupape de régulation (14) comprend une lèvre périphérique (24) en contact étanche avec la surface intérieure (25) de la partie de conduit (16), dans lequel la soupape de régulation (14) a généralement la forme d'un cône tronqué, avec l'ouverture (26) s'étendant à travers approximativement le centre de celui-ci, et la lèvre périphérique (24) à la base.

**3.** Système selon la revendication 1, dans lequel le gaz est l'air.

**4.** Système selon la revendication 1, dans lequel le matériau caoutchouté de la soupape de régulation (14) est du caoutchouc.

**5.** Système selon la revendication 1, dans lequel le paramètre d'inversion ($\alpha$) est entre 0,98 et 1,02.

**6.** Système selon la revendication 1, comprenant un réservoir sous pression (10) de 50 bars, dans lequel le matériau caoutchouté de la soupape de régulation (14) a une dureté de Shore de 50.

**7.** Système selon la revendication 1, qui est un système produisant des gouttelettes de liquide pour le nettoyage des dents.

**8.** Soupape de régulation (14) destinée à être utilisée avec un réservoir de gaz sous pression (10), **caractérisée par** un matériau caoutchouté ayant une ouverture (26) traversante, dans laquelle la soupape de régulation (14) a généralement la forme d'un cône tronqué, avec l'ouverture (26) s'étendant à travers approximativement le centre de celui-ci, et une lèvre périphérique (24) à la base, dans laquelle un paramètre d'inversion ($\alpha$) déterminant un changement de la surface de coupe transversale ($A_c$) de l'ouverture (26) à travers la soupape de régulation (14) inversement proportionnel au changement de pression ($P_o$) du gaz dans le réservoir sous pression (10) selon la formule $A_c \propto P_o^{-\alpha}$ est entre 0,9 et 1,1.

**9.** Soupape de régulation (14) selon la revendication 8, dans laquelle le matériau caoutchouté est du caoutchouc.

FIG. 1

EP 1 904 774 B1

FIG. 2

**EP 1 904 774 B1**

**REFERENCES CITED IN THE DESCRIPTION**

**Patent documents cited in the description**

- US 2839225 A
- DE 20304172 U1
- US 3901272 A
- WO 60537690 A